# FASCICULE DE BREVET EUROPEEN

(11) **EP 0 976 528 B1**
(45) Date de publication et mention de la délivrance du brevet: **31.10.2001**
(21) Numéro de dépôt: 99420162.2
(22) Date de dépôt: 13.07.1999
(51) Int. Cl.: B29C 55/14, B65H 20/00

(54) **Dispositif d'introduction automatique d'un ruban de film de matière synthétique dans une machine d'étirage transversal**
Vorrichtung zum automatischen Einfädeln eines synthetischen Filmbandes in eine Transversal-Streckmaschine
Device for automatic threading of a synthetic film ribbon into a transversally stretching machine

(30) Priorité: 29.07.1998 FR 9809941
(43) Date de publication de la demande: 02.02.2000
(73) Titulaire: DARLET MARCHANTE TECHNOLOGIE S.A., F-73370 Le Bourget du Lac (FR)
(72) Inventeur: Cozian, Alain, 73290 la Motte Servolex (FR)
(74) Mandataire: Maureau, Philippe

(56) Documents cités:
- EP-A- 0 427 234
- DE-A- 4 415 114
- US-A- 3 762 250
- US-A- 4 210 987
- US-A- 4 821 935
- ANONYMOUS: "Automated stretch initiation cutter" RESEARCH DISCLOSURE, vol. 274, no. 051, 10 février 1987 (1987-02-10), page 87 XP002098858 & DATABASE WPI Derwent Publications Ltd., London, GB; AN 87-077593

## Description

Les films de matière synthétique bi-orientés sont obtenus à partir d'un ruban extrudé, après que de la matière à l'état fondu ait été déposée sur un tambour de coulée. Le ruban passe ensuite dans une machine d'étirage longitudinal, dans lequel l'étirage est réalisé en raison d'un différentiel de vitesse entre différents cylindres successifs. Le ruban passe ensuite dans une machine d'étirage transversal, dans lequel le ruban est tenu par des pinces montées sur des chaînes, dont l'écartement augmente progressivement.

Lors de la mise en production de l'installation, le film primaire est introduit à basse vitesse dans la machine d'étirage longitudinal. Lors de cette introduction, le taux d'étirage est d'environ 1, ce qui fait que le film conserve l'épaisseur de départ. Il est donc trop épais pour être introduit directement dans les pinces de la machine d'étirage transversal.

Dans ces conditions, le ruban est tout d'abord placé sur une enrouleuse auxiliaire disposée entre la machine d'étirage longitudinal et la machine d'étirage transversal, puis le taux d'étirage longitudinal est progressivement augmenté, soit au taux final, soit à un taux intermédiaire, ce qui a comme conséquences la réduction de l'épaisseur du ruban et une augmentation de la vitesse.

Lorsque le taux d'étirage désiré est atteint, le ruban est prélevé à la main et introduit dans les pinces de la machine d'étirage transversal pour être étiré transversalement avant d'être amené sur une enrouleuse disposée à l'aval de la machine.

Lorsque ces opérations ont été réalisées, la vitesse est progressivement augmentée jusqu'à la vitesse de production souhaitée. Toutefois de telles opérations sont complexes et dangereuses pour les opérateurs, et se traduisent sur des machines rapides et à haut débit par une perte de matière importante. Il peut être noté que sur une installation moderne, la vitesse de production est supérieure à 300 mètres de ruban par minute, alors qu'il est extrêmement difficile d'introduire manuellement un ruban dans des pinces à des vitesses de production supérieures à 150 mètres par minute. La différence importante entre les deux niveaux de vitesse rend nécessaire l'existence d'une période dite de montée en vitesse qui est longue et pendant laquelle la qualité du film n'est pas satisfaisante, la machine n'ayant pas le temps de se stabiliser.

Le but de l'invention est de fournir un dispositif d'introduction automatique d'un ruban de film de matière synthétique dans une machine d'étirage transversal, à grande vitesse, et sans intervention manuelle, c'est à dire en toute sécurité pour les opérateurs.

A cet effet, le dispositif qu'elle concerne, destiné à l'introduction automatique d'un ruban de film de matière synthétique en provenance d'une machine d'étirage longitudinal, dans une machine d'étirage transversal, cette dernière comportant deux chaînes sans fin portant des pinces destinées à saisir les bords du ruban, les deux chaînes en vis à vis s'écartant progressivement l'une de l'autre pour réaliser l'étirage transversal du film, les deux chaînes passant au niveau de l'entrée de la machine sur des roues de changement de direction appelées tourteaux, un mandrin d'enroulement auxiliaire étant disposé à la sortie de la machine d'étirage longitudinal, en-dessous de cette sortie, est caractérisé en ce qu'il comprend :
- un cylindre fixe d'axe perpendiculaire à l'axe de défilement du film, placé en amont de l'entrée de la machine d'étirage transversal, et dont la génératrice inférieure est située dans le plan de déplacement du film dans la machine d'étirage transversal,
- un caisson d'axe perpendiculaire à l'axe de défilement du film, monté sur un support mobile, pour pouvoir être déplacé entre une position escamotée et une position dans laquelle le caisson est situé entre le cylindre fixe et l'entrée de la machine d'étirage transversal, la face supérieure du caisson étant alors disposée sensiblement dans le plan de déplacement du film dans la machine d'étirage transversal, le caisson servant au logement d'un moins un couteau déplaçable dans la direction de l'axe du caisson et escamotable, pour pouvoir dépasser ou non d'une fente ménagée dans la face supérieure du caisson, et
- deux tables élévatrices associées chacune à un tourteau de la machine d'étirage transversal et déplaçables entre une position basse et une position dans laquelle elles sont situées dans le plan de circulation des pinces de préhension du film.

Le ruban de film étant en cours d'enroulement et descendant presque verticalement sur le mandrin d'enroulement auxiliaire, le caisson est déplacé pour présenter la bande devant les pinces, à l'entrée de la machine d'étirage transversal. Après ce positionnement le ruban est coupé, la partie coupée prenant appui sur les tables élévatrices qui positionnent l'extrémité du ruban ainsi formée entre les pinces de préhension de la machine d'étirage transversal.

Suivant une caractéristique de l'invention, les deux tourteaux de la machine d'étirage transversal sont déplaçables transversalement l'un par rapport à l'autre.

En outre, les deux tourteaux de la machine d'étirage transversal sont équipés de deux détecteurs de position des lisières du film, qui stoppent le rapprochement des tourteaux lorsque les fonds des pinces sont alignés avec les bords du film. Avantageusement dans ce cas, les détecteurs de position des lisières du film sont liés mécaniquement aux deux tourteaux et sont disposés en amont du cylindre fixe. Les deux tourteaux d'entrée de la machine d'étirage étant en position écartée, ils se rapprochent jusqu'à ce que les détecteurs de lisières du film repèrent les bords du film, permettant ainsi d'aligner les fonds des pinces avec les bords du film. Dans cette position, le mouvement de rapprochement des tourteaux est stoppé avant l'opération de découpe du ruban précédant la prise en charge de celui-ci par les pinces de la machine d'étirage transversal.

Suivant une autre caractéristique de l'invention, le caisson contient deux couteaux coaxiaux dont les déplacements sont commandés de façon symétrique, de l'extérieur vers le centre. Avantageusement, les couteaux sont entraînés par un système à vitesse variable et sont montés sur un système oscillant de manière à s'orienter librement en fonction de l'angle de découpe du ruban.

Compte tenu de l'avance du ruban, les deux couteaux se déplaçant de l'extérieur vers l'intérieur vont produire une découpe en forme de V, assurant la formation de deux cornes latérales en matière synthétique semi-rigide qui, libérées de toute contrainte de traction, suivent leur déplacement à l'horizontale pendant que la partie centrale du ruban continue à être tractée par le mandrin d'enroulement auxiliaire. Les cornes latérales quittant le caisson sont immédiatement reprises, supportées et guidées par les deux tables élévatrices. Lorsque les deux couteaux arrivent au centre, et se rapprochent jusqu'à être à quelques millimètres l'un de l'autre, minimum requis pour la fixation des lames, les couteaux sont rétractés. Les tensions opposées résultant d'une part de la traction des pinces de préhension et, d'autre part, de la traction du mandrin d'enroulement auxiliaire provoquent la rupture de la petite bande centrale qui n'a pas été coupée par les couteaux.

Afin d'éviter la propagation ou le maintien d'une déchirure dans le sens de l'étirage longitudinal, après la rupture de la languette centrale, ce dispositif comporte un couteau disposé en amont du caisson, sur l'axe de défilement du ruban, actionné par un vérin pneumatique pour perforer transversalement le film sur une largeur de plusieurs centimètres et stopper tout risque de propagation de déchirure consécutivement à la découpe du film.

Suivant une autre caractéristique de l'invention, le caisson est équipé d'un rouleau de détour assurant le guidage du ruban vers le mandrin d'enroulement auxiliaire, avant introduction dans la machine d'étirage transversal.

Selon une forme d'exécution de ce dispositif, le caisson est fixé sur un châssis monté pivotant sur un portique ou similaire indépendant ou appartenant à la machine d'étirage longitudinal.

Conformément à un mode de mise en oeuvre, ce dispositif comprend des moyens de commande réalisant les opérations successives suivantes après que le ruban sortant de la machine d'étirage longitudinal soit en cours d'enroulement sur le mandrin d'enroulement auxiliaire :
- amenée du caisson dans sa position située entre le cylindre fixe et les tourteaux d'entrée de la machine d'étirage transversal,
- rapprochement des tourteaux jusqu'à ce que les fonds des pinces soient alignés avec les bords du ruban,
- déplacement vers le haut des tables élévatrices,
- synchronisation de la vitesse des chaînes portant les pinces avec celle de la machine d'étirage longitudinal,
- découpe du ruban à l'aide des couteaux,
- engagement de l'extrémité découpée du ruban entre les pinces de préhension,
- arrêt du mandrin d'enroulement auxiliaire, et
- escamotage du caisson.

De toute façon l'invention sera bien comprise à l'aide de la description qui suit, en référence au dessin schématique annexé représentant, à titre d'exemple non limitatif, une forme d'exécution de ce dispositif.
- Figures 1 à 4 sont quatre vues en perspective du dispositif au cours de quatre phases de fonctionnement,
- Figure 5 en est une vue en coupe longitudinale au cours de la phase correspondant à la figure 2, c'est à dire juste avant découpe du ruban,
- Figure 6 en est une vue de dessus au cours de la phase de découpe transversale du ruban de film et d'amenée des bordures de ce ruban à la machine d'étirage transversal.

Le dispositif selon l'invention est interposé entre la sortie 2 d'une machine d'étirage longitudinal, et l'entrée 3 d'une machine d'étirage transversal d'un ruban de film de matière synthétique. A la sortie de la machine d'étirage longitudinal, et sous cette sortie, est disposé un mandrin 4 d'enroulement auxiliaire, sur lequel le ruban 5 sortant de la machine d'étirage longitudinal est amené après passage sur un rouleau 6 d'axe transversal à la direction de défilement du ruban. Lorsque la production est lancée, le ruban 5 est enroulé sur le mandrin 4, dont la vitesse d'entraînement est asservie à la vitesse de la machine d'étirage longitudinal. L'opérateur peut effectuer les opérations de réglage de la machine d'étirage longitudinal, et accroître la vitesse de défilement du ruban. Ces réglages étant effectués, l'étape suivante consiste à introduire le plus rapidement possible le ruban 5 dans la machine d'étirage transversal. Cette introduction est réalisée à l'aide du dispositif selon l'invention. Ce dispositif comprend un cylindre 7 fixe, d'axe perpendiculaire à l'axe de défilement du ruban, placé en amont de l'entrée de la machine d'étirage, et dont la génératrice inférieure est située dans le plan de déplacement du film dans la machine d'étirage transversal, ce plan étant défini par le parcours des pinces de préhension 8. Ces pinces de préhension, schématisées par la référence 8 au dessin, sont montées sur deux chaînes sans fin, s'écartant progressivement l'une de l'autre pour réaliser l'étirage transversal du film, et passant chacune, au niveau de l'entrée de la machine, sur des roues de changement de direction 9 appelées tourteaux. Chaque tourteau est équipé d'une table élévatrice 10, sensiblement horizontale, déplaçable entre une position basse où elle est située en dessous du plan de défilement du ruban, et une position haute dans laquelle elle est située sensiblement dans le plan du ruban, lors du défilement de celui-ci.

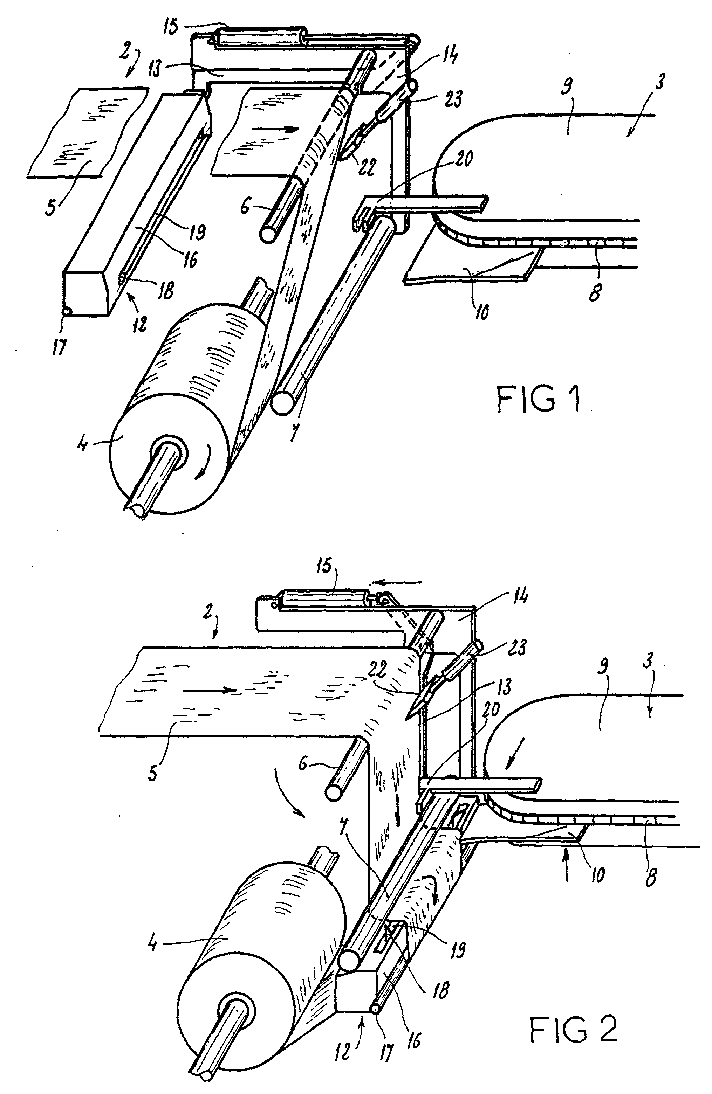

Le dispositif selon l'invention comprend également un caisson 12 monté sur un châssis 13, ce châssis étant monté pivotant sur un portique 14, l'actionnement en pivotement étant réalisé par un vérin 15. Le caisson est pivotant entre une position représentée à la figure 1 où il permet le libre enroulement du ruban 5 sortant de la machine d'étirage longitudinal sur le mandrin d'enroulement auxiliaire, et une position active, représentée aux figures 2 et suivantes, dans laquelle le caisson est disposé entre le cylindre fixe 7 et l'entrée de la machine d'étirage transversal, la face supérieure 16 du caisson étant située dans le plan de déplacement du film dans la machine d'étirage transversal. L'arête inférieure et située à droite au dessin, dans les phases représentées aux figures 2 et suivantes, est équipée d'un rouleau de détour 17 assurant le guidage du ruban vers le mandrin d'enroulement auxiliaire, après contournement du caisson 12.

Le caisson sert au logement de deux couteaux 18 déplaçables dans la direction de l'axe du caisson et escamotables, afin de pouvoir dépasser ou non d'une fente 19 débouchant dans la face supérieure du caisson. Les deux couteaux 18 ont des déplacements symétriques et convergents de l'extérieur vers le milieu du caisson. Cette symétrie du mouvement peut être donnée par un système vis-écrou à pas inversé, ou par un système à câble. Ce déplacement est motorisé par un système à vitesse variable, de manière à permettre le contrôle et l'ajustement des vitesses ainsi que le profil de la découpe. Les couteaux 18 sont d'une part escamotables et, d'autre part, montés sur un système oscillant de manière à s'orienter librement en fonction de l'angle de découpe.

Les deux tourteaux 9 sont déplaçables transversalement à la direction de défilement de la bande, l'un par rapport à l'autre. Chaque tourteau est équipé d'un détecteur de position de lisière du film 20, disposé en amont du cylindre fixe 7, ces détecteurs stoppant le rapprochement des tourteaux lorsque les fonds des pinces des deux chaînes en vis à vis de la machine d'étirage transversal sont alignés avec les bords du ruban.

Ce dispositif comprend enfin un couteau 22, monté en amont du caisson 12, et actionné par un vérin 23, qui a pour but de perforer transversalement le ruban dans la partie centrale de celui-ci sur une largeur de plusieurs centimètres en vue d'éviter toute propagation de déchirure.

Le fonctionnement de ce dispositif est le suivant.

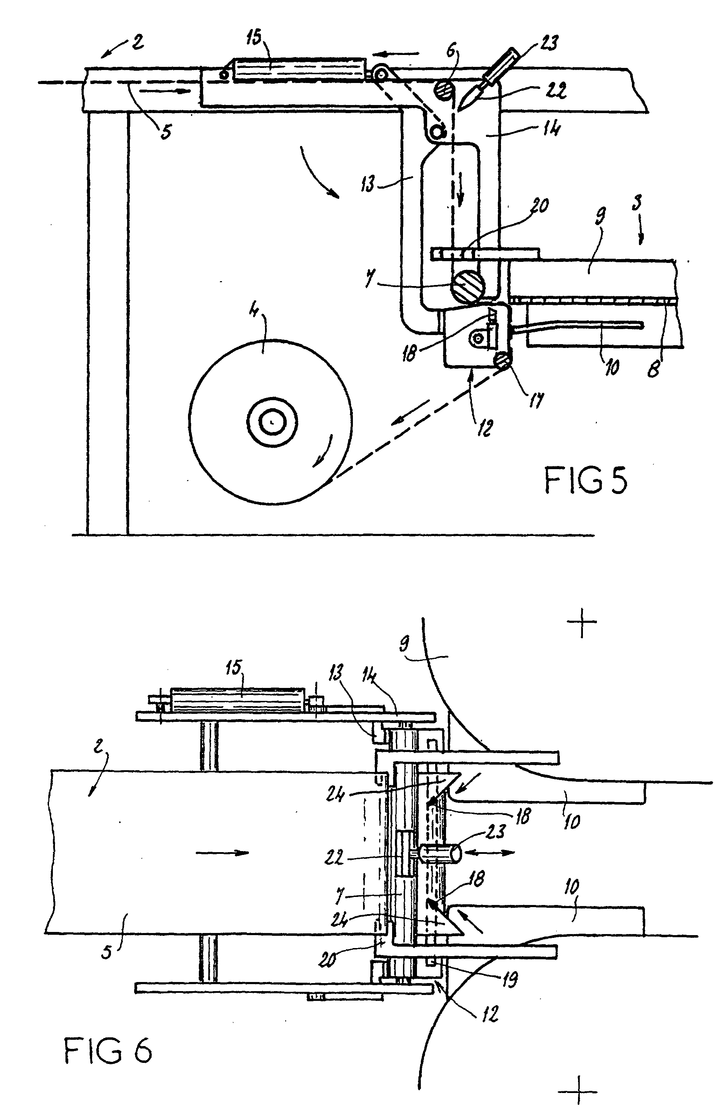

Pour réaliser le réglage de la machine d'étirage longitudinal, le ruban 5 de film descend presque verticalement sur le mandrin d'enroulement auxiliaire 4. Lorsque les réglages sont effectués et que la machine d'étirage longitudinal a atteint sa vitesse de fonctionnement normal, il est procédé à l'introduction du ruban dans la machine d'étirage transversal. Le dispositif se trouve dans la position représentée à la figure 1. Il est alors procédé à la mise en position active du caisson 12, qui prend la position occupée aux figures 2 et 5. Dans cette position le ruban passe derrière le cylindre fixe 7, sur la face supérieure du caisson 12, et contourne celui-ci après passage sur le rouleau 17.

Les tourteaux 9 d'entrée de la machine d'étirage transversal sont écartés en position d'attente, puis actionnés dans un sens de rapprochement jusqu'à ce que les détecteurs 20 détectent les bords du ruban 5. Ces détecteurs sont mécaniquement liés aux tourteaux 9 et sont placés juste en amont du cylindre fixe 7. Ils permettent d'aligner les fonds des pinces 8 avec les bords du ruban.

Les deux tables élévatrices 10 sont amenées à la hauteur des pinces 8. Ces tables élévatrices ont pour but de soutenir le ruban pendant la phase d'introduction dans la machine d'étirage transversal.

Les chaînes de la machine d'étirage transversal sont à ce moment synchronisées à la vitesse de la machine d'étirage longitudinal et du mandrin auxiliaire d'enroulement.

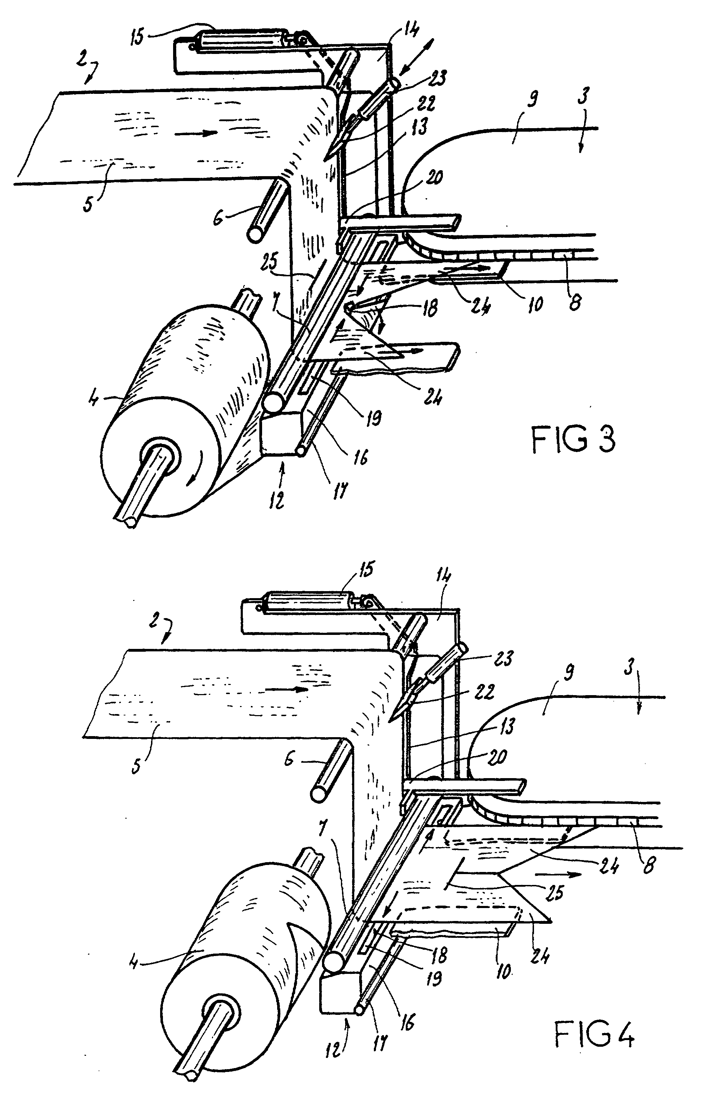

Les couteaux 18 disposés de part et d'autre du ruban, comme montré à la figure 2, dépassent du plan supérieur du caisson. Ces deux couteaux sont déplacés simultanément vers l'axe du ruban. La combinaison de l'avancement du ruban et du déplacement des couteaux il se forme deux cornes latérales 24, comme montré aux figures 3 et 6. Ces cornes étant libérées de toute contrainte de traction poursuivent leur déplacement à l'horizontale pendant que la partie centrale du ruban continue d'être tractée par le mandrin d'enroulement auxiliaire. Le mandrin en assurant la tension du ruban permet à la coupe de s'effectuer dans de très bonnes conditions. Les cornes 24, en quittant le caisson 12, sont immédiatement reprises, supportées et guidées par les deux tables élévatrices 10. Lorsque les deux couteaux 18 arrivent au centre, leurs deux supports se rejoignent, les couteaux se rapprochant jusqu'au maximum requis pour la fixation des lames, c'est à dire arrivent à une distance de quelques millimètres l'une de l'autre. Avant que le ruban ne casse dans sa partie centrale, les couteaux 18 sont rétractés. Les tensions opposées, résultant d'une part de la traction des pinces 8 et d'autre part du mandrin d'enroulement auxiliaire 4, provoquent la rupture de la petite bande centrale du ruban. L'introduction dans la machine d'étirage transversal est alors effective. Le mandrin 4 est arrêté, les tables élévatrices 10 sont abaissées et le caisson est ramené dans sa position escamotée correspondant à la position de figure 1.

Au droit de la prise des pinces 8, les tables comportent un relief incliné par rapport à l'axe de défilement du film, de manière à guider et forcer doucement le film à rentrer dans les pinces. D'autre déflecteurs, non représentés au dessin, sont prévus autour des couteaux 18 de manière à éviter l'accrochage des cornes 24 immédiatement après la découpe.

Afin d'éviter toute propagation de déchirure dans la partie centrale du ruban, le couteau 22 est actionné par le vérin 23 pour assurer la formation d'une pré-découpe transversale 25.

Comme il ressort de ce qui précède, l'invention apporte une grande amélioration à la technique existante en fournissant un dispositif de structure simple, permettant d'automatiser l'introduction d'un ruban de film à l'intérieur d'une machine d'étirage transversal, cette introduction pouvant être effectuée à grande vitesse, ce qui améliore la qualité des produits puisqu'évitant une montée progressive de la vitesse des machines, et évitant tout risque physique pour les opérateurs.

## Revendications

1. Dispositif d'introduction automatique d'un ruban (5) de film de matière synthétique en provenance d'une machine d'étirage longitudinal (2) dans une machine d'étirage transversal (3), cette dernière comportant deux chaînes sans fin portant des pinces (8) destinées à saisir les bords du ruban, les deux chaînes en vis à vis s'écartant progressivement l'une de l'autre pour réaliser l'étirage transversal du film, les deux chaînes passant au niveau de l'entrée de la machine sur des roues de changement de direction appelées tourteaux (9), un mandrin (4) d'enroulement auxiliaire étant disposé à la sortie de la machine d'étirage longitudinal, en-dessous de cette sortie, **caractérisé en ce qu'**il comprend :
- un cylindre fixe (7) d'axe perpendiculaire à l'axe de défilement du film (5), placé en amont de l'entrée de la machine d'étirage transversal, et dont la génératrice inférieure est située dans le plan de déplacement du film dans la machine d'étirage transversal,
- un caisson (12) d'axe perpendiculaire à l'axe de défilement du film, monté sur un support mobile (13), pour pouvoir être déplacé entre une position escamotée et une position dans laquelle le caisson (12) est situé entre le cylindre fixe (7) et l'entrée de la machine d'étirage transversal, la face supérieure du caisson étant alors disposée sensiblement dans le plan de déplacement du film dans la machine d'étirage transversal, le caisson servant au logement d'un moins un couteau (18) déplaçable dans la direction de l'axe du caisson et escamotable, pour pouvoir dépasser ou non d'une fente (19) ménagée dans la face supérieure du caisson, et
- deux tables élévatrices (10) associées chacune à un tourteau (9) de la machine d'étirage transversal et déplaçables entre une position basse et une position dans laquelle elles sont situées dans le plan de circulation des pinces (8) de préhension du film.

2. Dispositif selon la revendication 1, **caractérisé en ce que** les deux tourteaux (9) de la machine d'étirage transversal sont déplaçables transversalement l'un par rapport à l'autre.

3. Dispositif selon la revendication 2, **caractérisé en ce que** les deux tourteaux (9) de la machine d'étirage transversal sont équipés de deux détecteurs de position (20) des lisières du film (5), qui stoppent le rapprochement des tourteaux (9) lorsque les fonds des pinces (8) sont alignés avec les bords du film.

4. Dispositif selon la revendication 3, **caractérisé en ce que** les détecteurs de position (20) des lisières du film sont liés mécaniquement aux deux tourteaux (9) et sont disposés en amont du cylindre fixe (7).

5. Dispositif selon l'une quelconque des revendications 1 à 4, **caractérisé en ce que** le caisson (12) contient deux couteaux (18) coaxiaux dont les déplacements sont commandés de façon symétrique, de l'extérieur vers le centre.

6. Dispositif selon la revendication 5, **caractérisé en ce que** les couteaux (18) sont entraînés par un système à vitesse variable.

7. Dispositif selon l'une quelconque des revendications 5 et 6, **caractérisé en ce que** les couteaux (18) sont montés sur un système oscillant de manière à s'orienter librement en fonction de l'angle de découpe du ruban.

8. Dispositif selon l'une quelconque des revendications 1 à 7, **caractérisé en ce que** le caisson (12) est équipé d'un rouleau de détour (17) assurant le guidage du ruban (5) vers le mandrin d'enroulement auxiliaire (4), avant introduction dans la machine d'étirage transversal.

9. Dispositif selon l'une quelconque des revendications 1 à 8, **caractérisé en ce que** le caisson (12) est fixé sur un châssis (13) monté pivotant sur un portique (14) ou similaire indépendant ou appartenant à la machine d'étirage longitudinal.

10. Dispositif selon les revendications 1 à 9, **caractérisé en ce qu'**il comporte un couteau (22) disposé en amont du caisson (12), sur l'axe de défilement du ruban (5), actionné par un vérin pneumatique (23) pour perforer transversalement le film (5) sur une largeur de plusieurs centimètres et stopper tout risque de propagation de déchirure consécutivement à la découpe du film.

11. Dispositif selon les revendications 1 à 10, **caractérisé en ce qu'**il comprend des moyens de commande réalisant les opérations successives suivantes après que le ruban sortant de la machine d'étirage longitudinal soit en cours d'enroulement sur le mandrin d'enroulement auxiliaire :
- amenée du caisson (12) dans sa position située entre le cylindre fixe (7) et les tourteaux (9) d'entrée de la machine d'étirage transversal,
- rapprochement des tourteaux (9) jusqu'à ce que les fonds des pinces (18) soient alignés avec les bords du ruban,
- déplacement vers le haut des tables élévatrices (10),
- synchronisation de la vitesse des chaînes portant les pinces (8) avec celle de la machine d'étirage longitudinal,
- découpe du ruban (5) à l'aide des couteaux,
- engagement de l'extrémité découpée du ruban (5) entre les pinces de préhension (8),
- arrêt du mandrin d'enroulement auxiliaire (4), et
- escamotage du caisson (12).

## Patentansprüche

1. Vorrichtung zum automatischen Einführen eines aus einer Längsstreckmaschine (2) kommenden Folienbandes (5) aus Kunststoff in eine Querstreckmaschine (3), wobei letztere zwei Endlosketten umfasst, die Einspannvorrichtungen (8) tragen, die dazu bestimmt sind, die Bandränder zu ergreifen, wobei sich die beiden einander zugewandten Ketten nach und nach voneinander entfernen, um die Querstreckung der Folie zu bewerkstelligen, wobei die beiden Ketten auf Höhe des Maschineneingangs über Kettenscheiben (9) genannte Richtungsänderungsräder laufen, wobei ein zusätzlicher Aufrolldorn (4) am Ausgang der Längsstreckmaschine unterhalb dieses Ausgangs angeordnet ist, **dadurch gekennzeichnet, dass** sie umfasst:
- eine zum Durchlauf der Folie (5) senkrechte, feststehende Zylinderachse (7), die vor dem Eingang der Querstreckmaschine angeordnet ist und deren untere Mantellinie sich auf der Fortbewegungsebene der Folie in der Querstreckmaschine befindet,
- einen zum Durchlauf der Folie senkrechten Kasten (12) der Achse, der auf einer beweglichen Halterung (13) montiert ist, um zwischen einer versenkten Position und einer Position verschoben werden zu können, bei der sich der Kasten (12) zwischen dem feststehenden Zylinder (7) und dem Eingang der Querstreckmaschine befindet, wobei sich die obere Fläche des Kastens dann im wesentlichen in der Fortbewegungsebene der Querstreckmaschine befindet, wobei der Kasten zur Aufnahme mindestens eines Messers (18) dient, das in der Richtung der Kastenachse verschiebbar und versenkbar ist, um aus einem in der oberen Fläche des Kastens ausgebildeten Schlitz (19) vorstehen zu können oder auch nicht, und
- zwei jeweils mit einer Kettenscheibe (9) der Querstreckmaschine verbundenen Hubtischen (10), die zwischen einer gesenkten Position und einer Position verschiebbar sind, in der sie sich in der Umlaufebene der Einspannvorrichtungen (8) zum Ergreifen der Folie befinden.

2. Vorrichtung nach Anspruch 1, **dadurch gekennzeichnet, dass** die beiden Kettenscheiben (9) der Querstreckmaschine zu einander quer verschiebbar sind.

3. Vorrichtung nach Anspruch 2, **dadurch gekennzeichnet, dass** die beiden Kettenscheiben (9) der Querstreckmaschine mit zwei Sensoren (20) zum Erfassen der Ränder der Folie (5) ausgestattet sind, die die Annäherung der Kettenscheiben (9) dann anhalten, wenn die Unterteile der Einspannvorrichtungen (8) mit den Rändern der Folie fluchten.

4. Vorrichtung nach Anspruch 3, **dadurch gekennzeichnet, dass** die Sensoren (20) zum Erfassen der Ränder der Folie mechanisch mit den beiden Kettenscheiben (9) verbunden und vor dem feststehenden Zylinder (7) angeordnet sind.

5. Vorrichtung nach einem der Ansprüche 1 bis 4, **dadurch gekennzeichnet, dass** der Kasten (12) zwei koaxiale Messer (18) enthält, deren Ortsveränderungen symmetrisch von aussen zur Mitte hin gesteuert sind.

6. Vorrichtung nach Anspruch 5, **dadurch gekennzeichnet, dass** die Messer (18) von einem System mit veränderlicher Geschwindigkeit angetrieben sind.

7. Vorrichtung nach einem der Ansprüche 5 und 6, **dadurch gekennzeichnet, dass** die Messer (18) auf einem Pendelsystem befestigt sind, um sich in Anhängigkeit vom Schnittwinkel des Bandes frei auszurichten.

8. Vorrichtung nach einem der Ansprüche 1 bis 7, **dadurch gekennzeichnet, dass** der Kasten (12) mit einer Umlenkwalze (17) ausgestattet ist, die die Führung des Bandes (5) zum zusätzlichen Aufrolldorn (4) hin sicherstellt, bevor es in die Querstreckmaschine eingeführt wird.

9. Vorrichtung nach einem der Ansprüche 1 bis 8, **dadurch gekennzeichnet, dass** der Kasten (12) auf einem Rahmen (13) befestigt ist, der schwenkbar auf einem Portal (14) oder dergleichen befestigt ist, das eigenständig oder Teil der Längsstreckmaschine ist.

10. Vorrichtung nach einem der Ansprüche 1 bis 9, **dadurch gekennzeichnet, dass** sie ein Messer (22) umfasst, das vor dem Kasten (12) auf der Fortbewegungsachse des Bandes (5) angeordnet und von einem pneumatischen Stellglied (23) angetrieben ist, um die Folie (5) auf einer Breite von mehreren Zentimetern zu perforieren, und um jegliche Gefahr auszuschliessen, dass sich ein Riss infolge des Abschneidens der Folie fortpflanzt.

11. Vorrichtung nach einem der Ansprüche 1 bis 10, **dadurch gekennzeichnet, dass** sie Steuermittel umfasst, die die folgenden aufeinanderfolgenden Vorgänge bewerkstelligen, wenn das aus der Längsstreckmaschine austretende Band auf dem zusätzlichen Aufrolldorn aufgerollt wird:
- Verstellen des Kastens (12) in seine Position zwischen dem feststehenden Zylinder (7) und den Kettenscheiben (9) des Eingangs der Querstreckmaschine,
- Annäherung der Kettenscheiben (9), bis die Unterteile der Einspannvorrichtungen (18) mit den Folienrändern fluchten,
- Anheben der Hubtische (10),
- Synchronisieren der Geschwindigkeit der die Einspannvorrichtungen (8) tragenden Ketten mit derjenigen der Längsstreckmaschine,
- Abschneiden des Bandes (5) mittels der Messer,
- Einbringen des abgeschnittenen Ende des Bandes (5) in die Einspannvorrichtungen (8),
- Anhalten des zusätzlichen Aufrolldorns (4), und
- Versenken des Kastens (12).

## Claims

1. Device for automatically introducing a strip of film (5) made of synthetic material coming from a longitudinal stretching machine (2) into a transverse stretching machine (3), the latter machine including two endless chains carrying clamps (8) designed to grip the edges of the strip, the two facing chains moving progressively away from each other so as to produce transverse stretching of the film, both chains passing at the level of the entry to the machine over direction changing wheels called sprockets (9), an auxiliary wind-up mandrel (4) being positioned at the outlet from the longitudinal stretching machine, below this outlet, **characterized in that** it comprises:
- a fixed cylinder (7) with an axis perpendicular to the axis in which the film (5) progresses, placed upstream from the entry to the transverse stretching machine, and of which the lower generator is situated in the plane in which the film moves in the transverse stretching machine,
- a box (12) with an axis perpendicular to the axis in which the film progresses, mounted on a movable support (13), so that it can be moved between a retracted position and a position in which the box (12) is situated between the fixed cylinder (7) and the entry to the transverse stretching machine, the upper face of the box being then positioned substantially in the plane in which the film moves in the transverse stretching machine, the box serving to house at least one knife (18) which can be moved in the direction of the axis of the box and which is retractable, so that it can or cannot project beyond a slot (19) provided in the upper face of the box, and
- two lifting tables (10), each associated with a sprocket (9) of the transverse stretching machine and which can be moved between a lower position and a position in which they are situated in the plane in which the clamps (8) for grasping the film circulate.

2. Device according to claim 1, **characterized in that** the two sprockets (9) of the transverse stretching machine can be moved transversely with respect to each other.

3. Device according to claim 2, **characterized in that** the two sprockets (9) of the transverse stretching machine are equipped with two detectors (20) of the position of the edges of the film (5), which stop the approach of the sprockets (9) when the bottoms of the clamps (8) are aligned with the edges of the film.

4. Device according to claim 3, **characterized in that** the detectors (20) of the position of the edges of the film are linked mechanically to the two sprockets (9) and are positioned upstream from the fixed cylinder (7).

5. Device according to any one of claims 1 to 4 **characterized in that** the box (12) contains two coaxial knives (18) of which the movements are controlled in a symmetrical manner, from the outside towards the centre.

6. Device according to claim 5, **characterized in that** the knives (18) are driven by a variable speed system.

7. Device according to either of claims 5 or 6, **characterized in that** the knives (18) are mounted on an oscillating system so as to be freely oriented according to the angle at which the strip is cut.

8. Device according to any one of claims 1 to 7, **characterized in that** the box 12 is equipped with a deflection roller (17) guiding the strip (5) towards the auxiliary wind-up mandrel (4) before it is introduced into the transverse stretching machine.

9. Device according to any one of claims 1 to 8, **characterized in that** the box (12) is attached to a chassis (13) mounted pivotingly on a frame (14) or the like which is independent of, or belongs to the longitudinal stretching machine.

10. Device according to claims 1 to 9, **characterized in that** it includes a knife (22) positioned upstream from the box (12) on the axis in which the strip (5) progresses, actuated by a pneumatic jack (23) so as to perforate the film (5) transversely over a width of several centimetres and to stop any risk of the propagation of a tear following the cutting of the film.

11. Device according to claims 1 to 10, **characterized in that** it includes means of control carrying out the following successive operations after the strip leaving the longitudinal stretching machine is in the process of being wound up on the auxiliary wind-up mandrel :
- bringing the box (12) into its position situated between the fixed cylinder (7) and the entry sprockets (9) of the transverse stretching machine,
- bringing the sprockets (9) together until the bottoms of the clamps (18) are aligned with the edges of the strip,
- moving the lifting tables (10) upwards,
- synchronizing the speed of the chains carrying the clamps (8) with that of the longitudinal stretching machine,
- cutting the strip (5) with the aid of the knives,
- engaging the cut end of the strip (5) between the grasping clamps (8),
- stopping the auxiliary wind-up mandrel (4), and
- retracting the box (12).
